# EUROPEAN PATENT SPECIFICATION

(11) **EP 2 530 037 B1**
(45) Date of publication and mention of the grant of the patent: **04.12.2013**
(21) Application number: 12169222.2
(22) Date of filing: 24.05.2012
(51) Int. Cl.: B65G 59/00

(54) **Method and system for processing a layer of products from a pallet**
Verfahren und System zur Verarbeitung einer Lage von Produkten von einer Palette
Procédé et système de traitement d'une couche de produits d'une palette

(30) Priority: 01.06.2011 NL 2006884
(43) Date of publication of application: 05.12.2012
(73) Proprietor: Vanderlande Industries B.V., 5466 RB Veghel (NL)
(72) Inventor: Verbruggen, Petrus Hendrikus Johannes Maria, 5402 BE UDEN (NL)
(74) Representative: Algemeen Octrooi- en Merkenbureau B.V.

(56) References cited:
- EP-A1- 2 062 838
- US-A1- 2008 193 272

## Description

The present invention relates to a method for processing a layer of products from a pallet.

The present invention also relates to a system for processing a layer of products from a pallet suitable for applying the method according to the present invention.

US 2008/193272 discloses a method and a system for automated depalletization. A layer including a slip sheet taken from a pallet using a vacuum gripper is placed on a conveyor belt. The layer is then transported by the conveyor belt to a further adjacent conveyor belt, wherein the slip sheet is removed from the layer by the slip sheet being brought into an intermediate space present between the conveyor belts as the layer is transferred from the conveyor belt to the further conveyor belt.

EP 2 062 838 discloses a suction table, the top of which is downward foldable into two parts. Arranged in the top are bores which connect to a vacuum generator. The table further has a beam movable over the top. When a layer of products from a pallet with a slip sheet thereunder is placed on the top of the table, the slip sheet is suctioned fixedly to the top by the vacuum. The products are then pushed off the table top by moving the beam over the top. The slip sheet herein remains suctioned fixedly to the top. Once all products have been pushed off the table, the vacuum is interrupted and the two parts of the top are subsequently folded downward so that the slip sheet falls/slides therefrom.

A drawback of the above described known suction table and the method applied therewith for processing a layer of products from a pallet is that the table is complex and susceptible to malfunction, and that the method requires many operations and is also susceptible to malfunction. It is difficult in practice to properly regulate the level of the underpressure of the suction table to the slip sheet. Relatively thin, fragile slip sheets are damaged relatively quickly, i.e. they soon tear as a result of the underpressure. Particles can then find their way into the vacuum system, this causing malfunction. The slip sheet can moreover not be reused as a result. In addition, the table is complex due to the foldable parts of the top and the provision of the vacuum device under the top. The method is time-consuming in view of the many successive operations required to separate a slip sheet from the layer of products present thereon. An object of the present invention is to provide a method which is simple and less susceptible to malfunction. Said object is achieved with the method according to the present invention, comprising the steps of:
a) providing a transport device with a movable first carrying surface, a movable second carrying surface and a stationary blocking element provided at a level higher than the first carrying surface and the second carrying surface,
b) placing on the first carrying surface a combination of a layer of products with a slip sheet thereunder from a pallet,
c) moving the first carrying surface under the stationary blocking element with moving means, wherein products are blocked by the blocking element and transfer from the first carrying surface onto the second carrying surface while the slip sheet, under the influence of friction with the first carrying surface, is carried along by the first carrying surface and passes under the blocking element, and
d) removing the layer of products from the second carrying surface.

An advantage of the method according to the present invention is that, by moving the first carrying surface under the stationary blocking member provided at a higher level, the slip sheet is immediately discharged when removed from under the layer of products, which is highly efficient. While the slip sheet is carried along by the first carrying surface and passes under the stationary blocking member, the layer of products is blocked at one and the same position on the transport device by the blocking member and transfers as a result from the first to the second carrying surface. This reduces the risk of malfunction, for instance due to products falling over. Co-displacement of the slip sheet by means of friction is a very simple and effective method of discharging the slip sheet, and the invention is hereby particularly suitable for application with relatively thin slip sheets. This is in contrast to the above described known method, wherein a slip sheet is adhered (by the vacuum) to the suction table. When the layer of products is removed from the slip sheet the friction force moreover at least almost completely disappears and the slip sheet can be removed from the surface of the first carrying surface without any further operations being required. Furthermore, a favourable separation of functionality between removal of the slip sheet and discharge of products is obtained by providing both the first and the second support surfaces in movable form, wherein the properties of the two carrying surfaces can be chosen optimally for this purpose.

The present invention also relates to a system for processing a layer of products from a pallet as according to the preamble of claim 2.

A system according to the preamble of claim 2 is disclosed in US 2008/193272.

The system according to the invention is characterized in that it further comprises a movable second carrying surface and a stationary blocking element provided at a level higher than the first carrying surface and the second carrying surface, wherein the moving means are adapted to displace the first carrying surface under the stationary blocking element, wherein products are blocked by the blocking element and transfer from the first carrying surface onto the second carrying surface while the slip sheet, under the influence of friction with the first carrying surface, is carried along by the first carrying surface and passes under the blocking element.

The stated advantages of the method according to the invention likewise apply to the system according to the invention.

It is favourable for both the first carrying surface and the second carrying surface to be formed by at least portions of a reciprocally movable belt transport member passed over pulleys, wherein the moving means comprise drive means for rotatably driving at least one of the pulleys, and wherein the second carrying surface is arranged relative to the first carrying surface such that, during displacement of the first carrying surface under the blocking element, the second carrying surface is displaced in the direction of the blocking element. During driving of the belt transport member the second carrying surface is thus displaced toward the blocking element and thereby comes to lie under the layer of products.

A high efficiency is achieved when the first carrying surface and the second carrying surface connect directly to each other. The length of the first carrying surface, as seen in the direction of displacement, is substantially equal to the length of the layer of products. The second carrying surface is hereby move directly under the layer as soon as the slip sheet is removed from under the layer.

Alternatively, it is favourable for the second carrying surface to be formed by at least a portion of a movable belt transport member passed over pulleys, wherein the moving means also comprise drive means for rotatably driving at least one of the pulleys, wherein the first carrying surface is formed by a plate element arranged directly above the belt transport member, wherein the moving means are adapted to displace the plate element reciprocally under the blocking element. When the plate element with the slip sheet thereon is displaced from under the layer, the products can hereby be transferred directly onto the second carrying surface without sliding any further thereover. This reduces the chance of malfunction of the system.

It is highly favourable for the first carrying surface to be adapted to have a higher static friction with a slip sheet than the second carrying surface during operation. This achieves that the slip sheet has a good grip on the first carrying surface, while products, as soon as they come to lie on the second carrying surface, can if necessary slide easily thereover so that damage to products does not occur, or does so to lesser extent. This can be achieved for instance by using different types of material for the first and second carrying surfaces, for instance in the case of the belt transport member two portions of a mutually differing rubber composition fixed to each other, or for instance by using the same material but providing this on the first portion with a different surface profile such that it is rougher, or has at least a higher static friction with a slip sheet during operation.

For stable transfer of the layer of products from the first carrying surface to the second, it is favourable for the blocking element to extend perpendicularly of the direction of the displacement of the first carrying surface.

It is favourable for the system to comprise further moving means for moving the blocking element substantially in vertical direction between a first, active position, in which the blocking element can block products during operation, and a second, passive position in which the blocking element is displaced out of the reach of products present on the first carrying surface during operation.

As seen in the direction of displacement of the second carrying surface, the length of the transport device is preferably at least substantially equal to the length of the upper side of the transport device. A layer of products which has been removed from a slip sheet can hereby be discharged quickly from the transport device.

It is also particularly favourable in this context for a discharge conveyor to be provided connecting to the transport device, wherein a carrying surface of the discharge conveyor is placed connecting to the second carrying surface of the transport device such that during a displacement thereof products transfer from at least the second carrying surface onto the carrying surface of the discharge conveyor during operation.

It is moreover favourable for a feed conveyor to be provided connecting to the transport device, wherein a carrying surface of the feed conveyor is placed connecting to the first carrying surface of the transport device such that during operation a combination of a separate layer of products with a slip sheet thereunder transfers from the carrying surface of the feed conveyor onto the first carrying surface of the transport device. The blocking element is more preferably placed here between the first carrying surface and the carrying surface of the feed conveyor and is further preferably movable in downward direction to a position below the plane of the first carrying surface and of the carrying surface of the feed conveyor for the purpose of being moved into its passive position.

The system preferably further comprises supply means for supplying to the transport device a combination of a separate layer of products with a slip sheet thereunder from a pallet, wherein the supply means are preferably of the vacuum gripper type.

The present invention will be further elucidated hereinbelow on the basis of the description of preferred embodiments of systems according to the present invention with reference to the following schematic figures, in which:
- figures 1a-1e show side views of a first preferred embodiment of a system according to the present invention in different successive operating states,
- figures 2a-2e show side views of a second preferred embodiment of a system according to the present invention in different successive operating states,
- figures 3a-3e show side views of a third preferred embodiment of a system according to the present invention in different successive operating states,
- figures 4a-4c show side views of a fourth preferred embodiment of a system according to the present invention in different successive operating states, and
- figures 5a and 5b show a three-dimensional view of the first preferred embodiment in two different operating states.

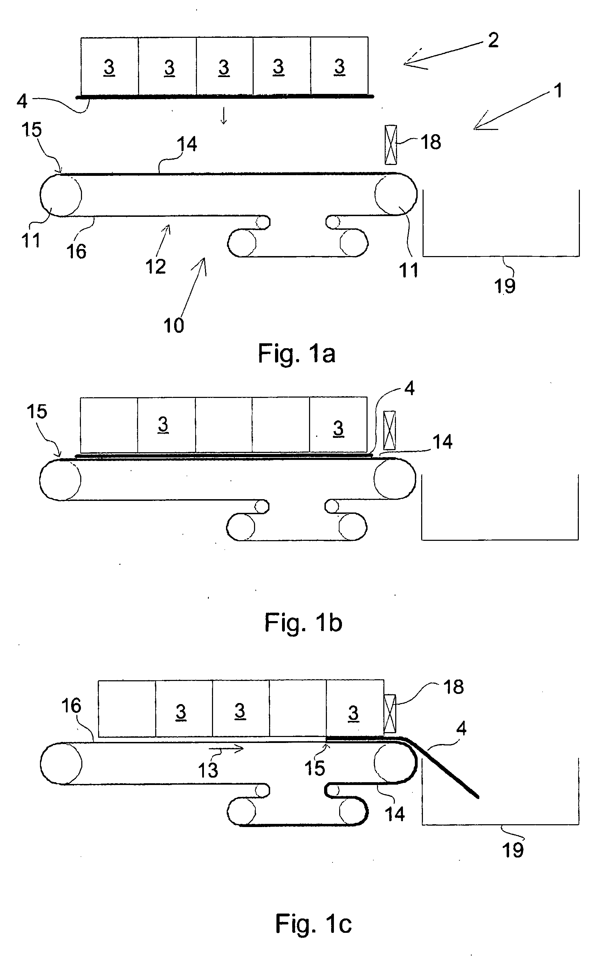

Figure 1a shows a system 1 with which a combination of a layer 2 with products 3 and a slip sheet 4 thereunder can be processed. The combination originates from a pallet, not further shown in the figures, on which such combinations are stacked. The layer 2 shown by way of example in the figures consists as seen in side view of five adjacently arranged identical products 3. As seen in front view the layer can for instance likewise consist of five adjacently arranged products 3, whereby the layer 2 is in fact a grid of 25 products. The slip sheet 4 can for instance be a relatively stiff sheet of for instance corrugated cardboard or a relatively limp sheet of thin paper or other suitable material. The dimensions of the slip sheet 4 are usually roughly the same as the outer dimensions of the layer 2, although it is a regular occurrence for a slip sheet 4 to be a little smaller than the layer 2.

The system 1 comprises a transport device formed substantially by a conveyor 10 comprising an endless transport member in the form of a belt 12 passed over pulleys 11. At least one of the pulleys 11 is drivable for the purpose of moving the belt 12 reciprocally over the pulleys 11. A stationary blocking element 18 is provided on the transport device above the conveyor 10, i.e. at a higher level than the belt 12, at some distance from the belt 12. The stationary blocking element 18 is connected in a manner not further shown in the figures to a frame of the transport device such that it cannot displace in the direction of displacement of the belt 12. The blocking element 18 is beam-like and extends transversely over the belt 12, i.e. at right angles to the plane of the drawing in the view shown in figure 1a.

The belt 12 has a first portion 14 which is relatively rough. The first portion of the belt 12 is indicated in the figures with a relatively thick full line. This relatively rough portion 14 is located on the upper side of the conveyor 10 in figure 1a and forms there a first carrying surface 14. A second remaining portion 16 of the belt 12 is relatively smooth compared to the first portion 14 and forms a second carrying surface 16 on which products can be placed, at least when the second portion 16 is located on the upper side of the conveyor 10. The second portion of the belt 12 is indicated in the figures with a thinner full line. Relatively rough is understood in the context of the invention to mean that the first portion 14 of the belt 12 is adapted to carry a slip sheet 4 along with the first portion 14 by means of friction during displacement of the first portion 14 by rotatably driving a pulley 11. The second, relatively smooth portion 16 has a surface which is adapted such that the products 3 can slide relatively easily over the second portion 16, at least when compared to the first portion 14. The advantage of such a conveyor belt 12 will be further elucidated below with reference to the description of a method for processing a layer of products 3 as specified above while making use of the above specified system 1.

In the situation of the system as shown in figure 1a a combination of a layer 2 with products 3 and a slip sheet 4 thereunder is displaced to the conveyor 10. Moving means of the conveyor 10 achieve that, via driving of a pulley 11, the first rough portion 14 of the belt 12 is placed on the upper side of the conveyor 10 and thus forms a first carrying surface 14 on which the combination can be placed.

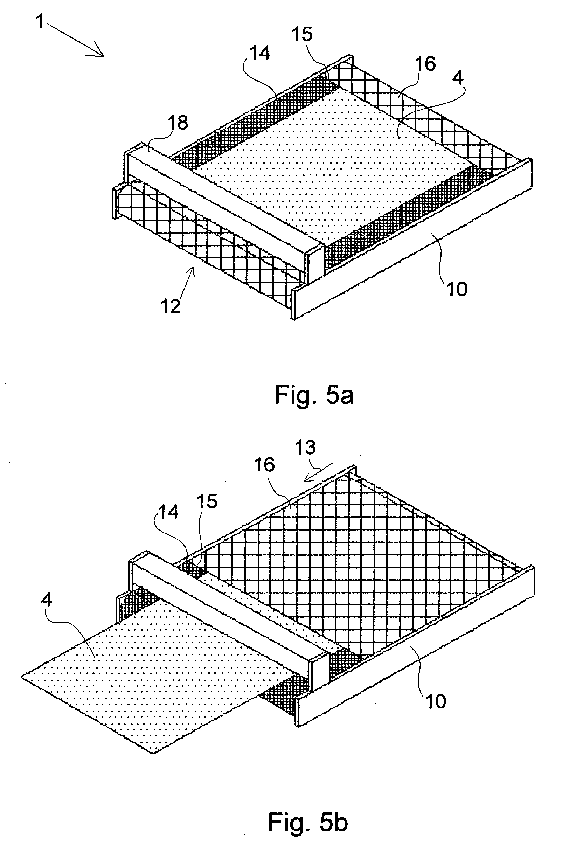

Relative to the situation according to figure 1a, in figure 1b the combination of the layer 2 and slip sheet 4 is placed on the first carrying surface 14. The system 1 according to figure 1b is shown in figure 5a, wherein a receiving bin 19 for slip sheets 4 to be further described below is not shown and wherein the layer 2 with products 3 present on the slip sheet 4 is not shown either. The belt 12 is then driven in a first direction of displacement 13 such that the portion of the belt 12 forming the first carrying surface 14 is displaced under the stationary blocking element 18. The slip sheet 4 is carried along here with the first carrying surface 14 under the influence of friction and likewise passes under the blocking element 18 and is thus removed from under the layer 2 while the part of the belt 12 forming the second carrying surface 16 comes to lie under the layer 2. See figure 1c and also figure 5b. The blocking element 18 is placed close to the surface of the belt 12 here such that only the slip sheet 4 can pass under the blocking element 18, while the blocking element 18 blocks the products 3 present on the slip sheet 4. Owing to the high friction between the rough first carrying surface 14 and the slip sheet 4 the slip sheet 4 is carried along during displacement of the first carrying surface 14 and the products 3 slide off the slip sheet 4 and come to lie on the second, smoother carrying surface 16, over which the products 3 can slide relatively easily. See figure 1c. In the situation according to figure 1b the first carrying surface 14 is preferably placed here relative to the slip sheet 4 such that a separating edge 15 between the first carrying surface 14 and second carrying surface 16 and remote from the blocking element 18 is positioned roughly at the position of the bounding edge of the slip sheet 4 located on this side. The products 3 hereby slide directly from the slip sheet 4 onto the second carrying surface 16 and do not first slide a (limited) distance over the rougher first carrying surface 14.

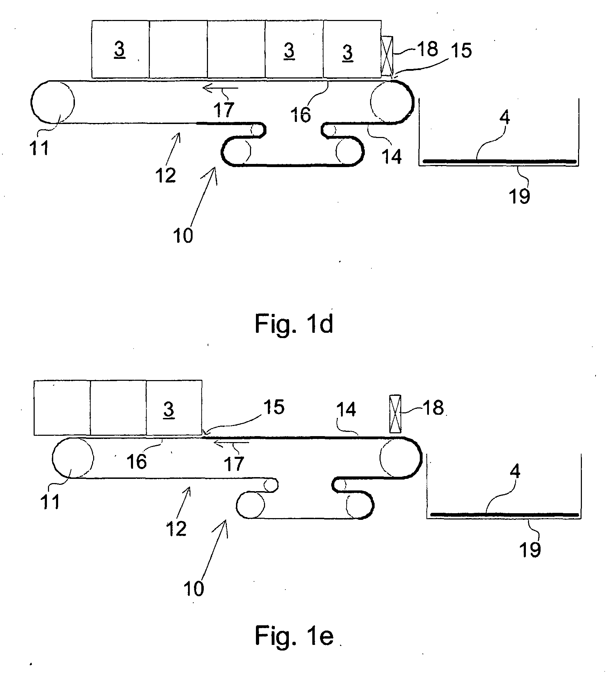

When the first carrying surface 14 has been displaced together with the slip sheet 4 so far under the blocking element 18 that the slip sheet 4 has been wholly removed from under the products 3, as shown in figure 1d, the belt 12 can be driven in an opposite second direction 17 for the purpose of discharging the layer 2 with products 3 from the conveyor 10. As shown in figure 1d and 1e, the slip sheet 4 can be collected here in a receiving bin 19 adapted for this purpose. A significant advantage of the fact that the slip sheet is carried along under the influence of friction by the first carrying surface 14 is that, as soon as the products 3 no longer rest on the slip sheet 4, the friction force at least almost completely disappears and that the slip sheet 4, for instance in the embodiment of the system 1 as shown in figure 1c wherein the belt 12 is passed over a pulley 11 just downstream of the blocking element 18, is automatically released from the belt 12 and can be collected in for instance a bin 19.

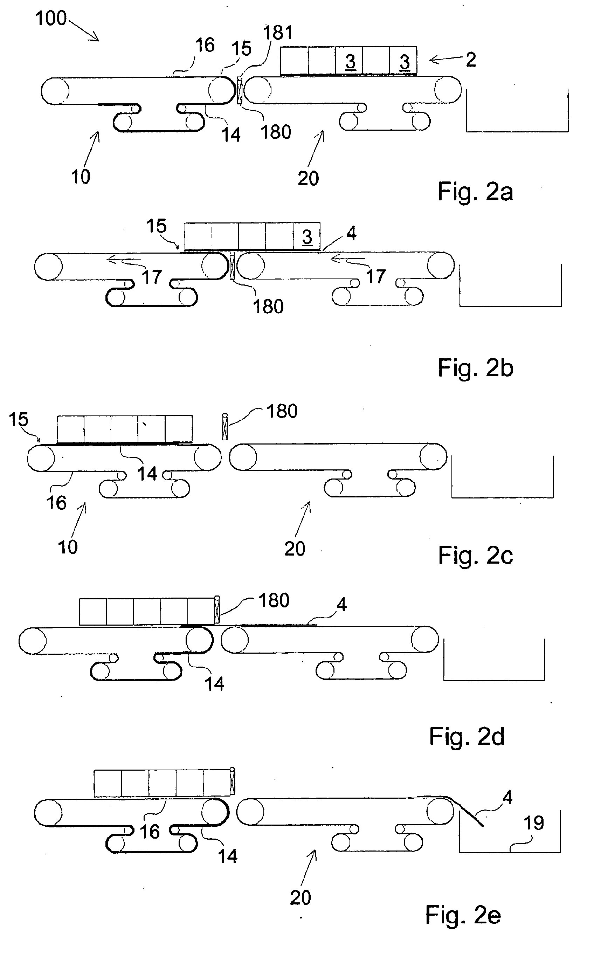

Figures 2a to 2e show a system 100 as a further preferred embodiment of a system according to the present invention. The system 100 comprises a transport device which is formed by substantially the same conveyor 10 as specified in the context of the description of the system 1, and corresponding components are therefore designated with corresponding reference numerals. The system further comprises a feed conveyor 20 placed adjacently of the conveyor 10. The feed conveyor 20 is a belt conveyor and is placed relative to the conveyor 10 such that products are transferred from a carrying surface of the feed conveyor 20 onto the belt 12 of the conveyor 10 by temporarily driving the two conveyors 10, 20 synchronously in the same direction 17.

A blocking element 180 is provided between the conveyors 10 and 20. The blocking element 180 corresponds functionally to the blocking element 18 as specified above. The blocking element 180 can however be displaced from a passive position, in which the blocking element 180 is situated out of reach of products present on the conveyors, to an active position in which the blocking element 180 can block products situated on the belt 12. In figures 2a and 2b the blocking element 180 is shown in the passive position in which it is located just below the carrying surfaces of the two conveyors 10, 20. A roller 181 is placed on the upper side of the blocking element 180 so that the space taken up by the blocking element 180 between the conveyors 10, 20 is filled and in the passive position products 3 can be transferred from the feed conveyor 20 onto the conveyor 10 via the roller 181 on the blocking element 180. As alternative to the blocking element 180 descending beneath the carrying surface between the conveyors 10, 20, it is of course also possible to opt to displace the blocking element 180 upward out of the reach of the products 3. In that case the conveyors 10, 20 can if desired be placed in direct connection.

The active position of the blocking element 180 is shown in figures 2c, 2d and 2e. The blocking element 180 is situated here in the same position as the stationary blocking element 18 shown in figures 1a-1e.

When a layer 2 with products 3 with a slip sheet 4 thereunder is placed on the feed conveyor 20 as shown in figure 2a, the blocking element 180 is placed in its passive position and the first carrying surface 14 of the belt 12 of the conveyor 10 is further positioned such that the bounding edge 15 between the first carrying surface 14 and the second carrying surface 16 is provided at the position of the blocking element 180. The conveyors 10, 20 are subsequently driven synchronously in the direction 17 as shown in figure 2b such that the layer 2, including slip sheet 4, is transferred from the feed conveyor 20 onto the first carrying surface 14 of the belt 12 of the conveyor 10. See figures 2b and 2c.

Once the combination of the layer 2 and the slip sheet 4 has passed completely over the blocking element 180 and is thus situated wholly on the first carrying surface 14 as shown in figure 2c, the blocking element 180 is displaced upward to its active position as likewise shown in figure 2c. The method further proceeds identically to the method as described above in the context of system 1. See figures 2c and 2d. The difference however is that, when the first carrying surface 14 is displaced with the slip sheet 4 under the blocking element 180 (see figure 2d and compare figure 1c), the slip sheet 4 comes to lie on the carrying surface of the conveyor 20 and is hereby further discharged to receiving bin 19, i.e. by driving the conveyor 20 in the direction opposite to the direction 17 as indicated in figure 2b. See figure 2e.

During discharge of the layer 2 with products 3 from the conveyor 10 wherein the slip sheet 4 is already removed in the above specified manner from under the layer 2, it is usually necessary to divide the layer 2 into separate rows of products 3 immediately upon discharge. The conveyor 10 is for this purpose driven intermittently such that one row of products 3 at a time is moved off the conveyor 10 and comes to lie for instance on a further conveyor (not shown). Further along, i.e. downstream, these rows are usually divided further such that eventually individual products 3 are transported separately of each other. Since the conveyor 10 is thus driven intermittently for the purpose of discharging products 3, no new combination of a layer 2 with a slip sheet 4 thereunder can be placed at that moment on the conveyor. The above described system 100 has the advantage here that a combination can indeed be placed ready on the feed conveyor 20 immediately following discharge of the slip sheet 4 over the second conveyor 20. The new combination can hereby be transferred from the feed conveyor 20 onto the first carrying surface of the conveyor 10 immediately following discharge of products, or even during discharge thereof since the separating edge 15 between the first carrying surface 14 and second carrying surface 16 is situated at the position of the blocking element 180 following removal of a slip sheet 4 from under the products 3 (see figure 2e). Successive layers of products from a pallet can hereby be processed more efficiently. As alternative to the intermittent driving of the conveyor 10 as described above, the conveyor 10 can of course also be driven such that the speed of the belt 12 is lower than the speed of a further conveyor provided adjacently thereof for discharging products, so that during the transfer of products from the conveyor 10 to the further conveyor the layer 2 thereby also divides into separate rows.

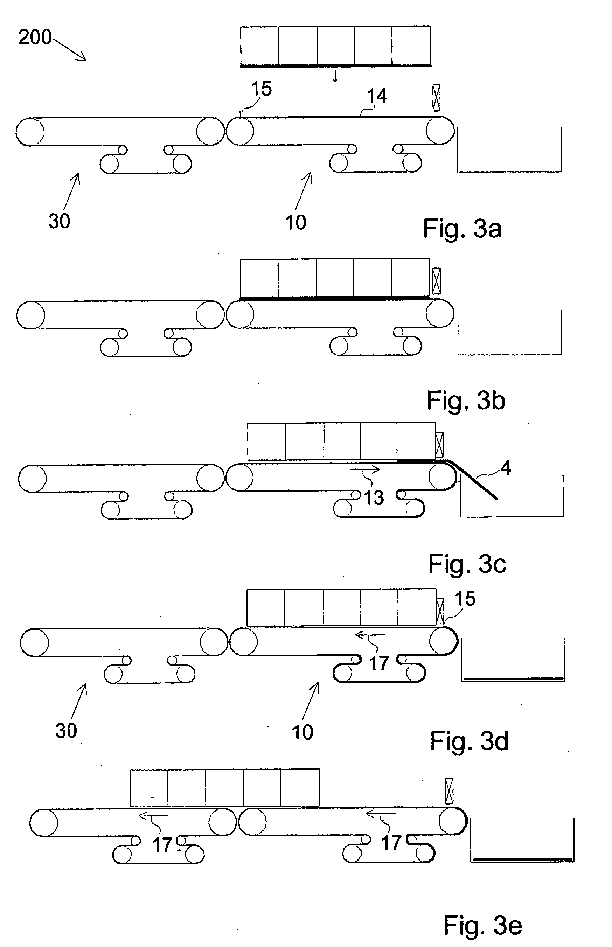

Figures 3a to 3e show a system 200 as another further preferred embodiment of a system according to the invention. The system 200 comprises a transport device with substantially the same conveyor 10 as specified above, and corresponding components are therefore designated with corresponding reference numerals. A discharge conveyor 30 is placed adjacently of the conveyor 10. The discharge conveyor 30 is a belt conveyor and is placed relative to the conveyor 10 such that products can be transferred from the conveyor 10 to the discharge conveyor 30 by driving the two conveyors 10, 30 temporarily and preferably synchronously in the same direction. Removal of a slip sheet 4 from under a layer 2 with products 3 takes place in the same manner as in the system 1 as described above. Compare figures 3a-3d to figures 1a-1d. In contrast to the situation as described above wherein the conveyor 10 is driven intermittently (or relatively slowly) during discharge of the layer 2, in the system 200 the whole layer 2 can be transferred in one synchronous movement of conveyors 10 and 30 before the products are transferred to a further conveyor for discharge of products, which can take place more quickly. The conveyor 10 is hereby more quickly available for removal of a slip sheet 4 from under a layer of products.

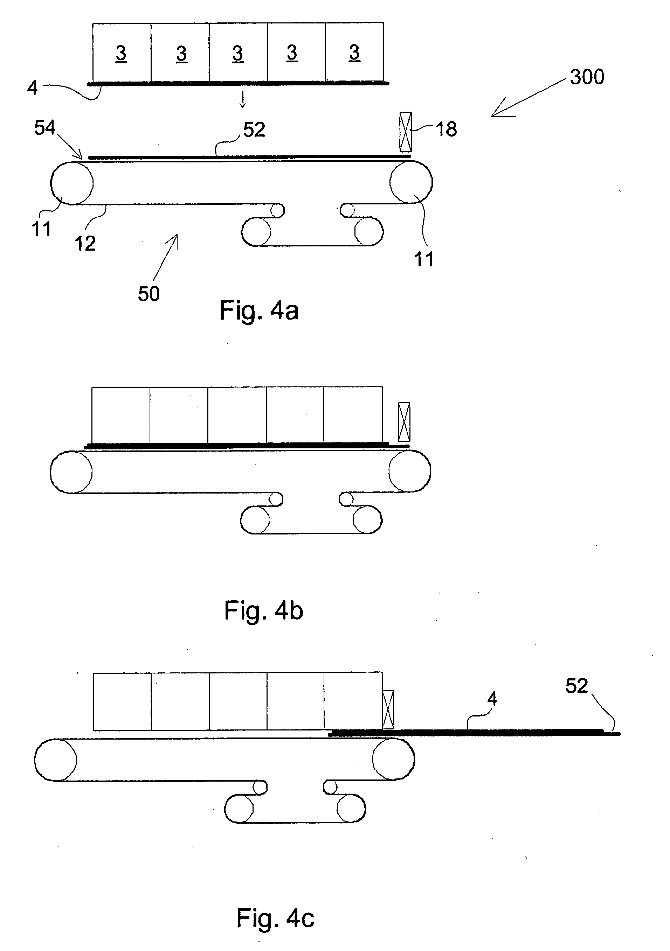

Figures 4a to 4c show a system 300 as another further preferred embodiment of a system according to the invention. The system 300 comprises a transport device with a conveyor 50 which is similar to the conveyor 10 as described above, and corresponding components are therefore designated with corresponding reference numerals. In contrast to the conveyor 10, the conveyor belt 12 does not have two separate portions of differing roughness forming separate carrying surfaces. The whole conveyor belt 12, at least at the location of the upper side of the conveyor 50, in fact forms a second carrying surface 54 for products 3. The first carrying surface is however formed by a separate plate element 52 which forms part of the transport device. The plate element 52 is arranged slidably on or, alternatively, at a short distance from the second carrying surface 54 and is movable reciprocally under the blocking element 18 by moving means (not shown). An upper side of the plate element 52 corresponds functionally to the above described first carrying surface 14, i.e. the roughness is such that, when the plate element 52 is displaced under the blocking element 18, the slip sheet 4 is carried along under the influence of increased friction. See figure 4c. During displacement of the plate element 52 under the blocking element 18 the products 3 slide off the plate element 52 on the side thereof remote from the blocking element 18 and the products 3 come to lie on the conveyor belt 12 forming the second carrying surface 54, following which they can be further discharged. The slip sheet 4 can be removed from the plate element 52, after which the plate element 52 is displaced back again under the blocking element 18 so that a further combination can be laid thereon.

As alternative to the system 300 shown in figures 4a-4c, in which the direction of displacement of the plate element 52 is parallel to the direction of displacement of the belt 12 and wherein the blocking element 18 extends transversely of this direction of displacement over the conveyor 50, it is also possible to rotate the plate element 52 and the blocking element 18 through 90 degrees so that the direction of displacement of the plate element 52 is at a right angle to the direction of displacement of the belt 12. In other words, the plate element 52 is then pulled out with the slip sheet 4 in transverse direction from under the products 3.

The combination of the layer 2 of products 3 and slip sheet 4 is for instance placed on the conveyor 10, 20, 50 by means of a depalletizing robot with a vacuum gripper not further shown in the figures. It is further also possible with the system according to the invention to process pallets wherein the layers of products are not, or not all, provided with slip sheets. In the case of processing a layer without slip sheet the conveyor 10 functions only for the purpose of further transport of the layer and the blocking element 18 is not used. In the case of the conveyor 50 the plate element 52, prior to placing of such a layer without slip sheet, can be displaced under the blocking element 18, or to a position out of the reach of the products, whereby the layer can be placed directly onto the belt 12.

## Claims

1. A method for processing a layer (2) of products (3) from a pallet, the method comprising the steps of:
a) providing a transport device (10; 50) with a movable first carrying surface (14; 52), a movable second carrying surface (16; 54) and a stationary blocking element (18; 180) provided at a level higher than the first carrying surface and the second carrying surface,
b) placing on the first carrying surface (14; 52) a combination of a layer of products with a slip sheet (4) thereunder from a pallet,
c) moving the first carrying surface (14; 52) under the stationary blocking element (18; 180) with moving means, wherein products (3) are blocked by the blocking element and transfer from the first carrying surface onto the second carrying surface (16; 54) while the slip sheet (4), under the influence of friction with the first carrying surface, is carried along by the first carrying surface and passes under the blocking element, and
d) removing the layer (2) of products (3) from the second carrying surface (16; 54).

2. A system (1; 100; 200; 300) for processing a layer (2) of products (3) from a pallet suitable for applying the method according to claim 1, the system comprising a transport device (10; 50) with a movable first carrying surface (14; 52) on which can be placed a combination of a layer (2) of products (3) with a slip sheet (4) thereunder from a pallet, and moving means for moving the first carrying surface (14; 52), **characterized in that** the system further comprises a movable second carrying surface (16; 54) and a stationary blocking element (18; 180) provided at a level higher than the first carrying surface and the second carrying surface, wherein the moving means are adapted to displace the first carrying surface (14; 52) under the stationary blocking element (18; 180), wherein products (3) are blocked by the blocking element and transfer from the first carrying surface onto the second carrying surface (16; 54) while the slip sheet (4), under the influence of friction with the first carrying surface, is carried along by the first carrying surface and passes under the blocking element.

3. A system according to claim 2, wherein both the first carrying surface (14) and the second carrying surface (16) are formed by at least portions of a reciprocally movable belt transport member (12) passed over pulleys (11), wherein the moving means comprise drive means for rotatably driving at least one of the pulleys, and wherein the second carrying surface is arranged relative to the first carrying surface such that, during displacement of the first carrying surface (14) under the blocking element (18; 180), the second carrying surface (16) is displaced in the direction of the blocking element.

4. A system according to claim 3, wherein the first carrying surface (14) and the second carrying surface (16) connect directly to each other.

5. A system according to claim 2, wherein the second carrying surface (54) is formed by at least a portion of a movable belt transport member (12) passed over pulleys (11), wherein the moving means also comprise drive means for rotatably driving at least one of the pulleys, wherein the first carrying surface is formed by a plate element (52) arranged directly above the belt transport member, wherein the moving means are adapted to displace the plate element reciprocally under the blocking element (18; 180).

6. A system according to any one of the preceding claims 2-5, wherein the first carrying surface (14; 52) is adapted during operation to have a higher static friction with a slip sheet (4) than the second carrying surface (16; 54).

7. A system according to any of the foregoing claims 2-6, wherein the blocking element (18; 180) extends perpendicularly of the direction of the displacement of the first carrying surface (14; 52).

8. A system according to any one of the preceding claims 2-7, further comprising further moving means for moving the blocking element (180) substantially in vertical direction between a first, active position, in which the blocking element can block products (3) during operation, and a second, passive position in which the blocking element is displaced out of the reach of products present on the first carrying surface (14; 52) during operation.

9. A system according to claim 3 or 5 or a respective dependent claim thereof, wherein as seen in the direction of displacement of the second carrying surface (16; 54) the length of the transport device (10; 50) is at least substantially equal to the length of the upper side of the transport device.

10. A system according to any one of the preceding claims 2-9, wherein a discharge conveyor (30) is provided connecting to the transport device (10; 50), wherein a carrying surface of the discharge conveyor is placed connecting to the second carrying surface (16; 54) of the transport device such that during a displacement thereof products (3) transfer during operation from at least the second carrying surface onto the carrying surface of the discharge conveyor.

11. A system according to claim 8 and according to claim 9 or 10, wherein a feed conveyor (20) is provided connecting to the transport device (10; 50), wherein a carrying surface of the feed conveyor is placed connecting to the first carrying surface (14; 52) of the transport device such that during operation a combination of a separate layer (2) of products (3) whith a slip sheet (4) thereunder is transferred from the carrying surface of the feed conveyor (20) onto the first carrying surface of the transport device.

12. A system according to any one of the preceding claims 2 to 10, wherein the system is further provided with supply means for supplying to the transport device a combination of a separate layer (2) of products (3) with a slip sheet (4) thereunder from a pallet, wherein the supply means are preferably of the vacuum gripper type.

## Patentansprüche

1. Verfahren zur Verarbeitung einer Lage (2) von Produkten (3) von einer Palette, wobei das Verfahren die Schritte umfasst:
a) Bereitstellen einer Transportvorrichtung (10; 50) mit einer bewegbaren ersten tragenden Fläche (14; 52), einer bewegbaren zweiten tragenden Fläche (16; 54) und einem stationären Blockierelement (18; 180), das auf einem höheren Niveau als die erste tragende Fläche und die zweite tragende Fläche vorgesehen ist,
b) Platzieren einer Kombination aus einer Lage von Produkten mit einem Gleitbogen (4) darunter von einer Palette auf die erste tragende Fläche (14; 52);
c) Bewegen der ersten tragenden Fläche (14; 52) unter dem stationären Blockierelement (18; 180) mit Bewegungsmitteln, wobei Produkte (3) durch das Blockierelement blockiert werden und von der ersten tragenden Fläche auf die zweite tragende Fläche (16; 54) umgesetzt werden, während der Gleitbogen (4) von der ersten tragenden Fläche unter dem Reibungseinfluss der ersten tragenden Fläche mitgeführt wird und unter dem Blockierelement durchläuft, und
d) Entfernen der Lage (2) von Produkten (3) von der zweiten tragenden Fläche (16; 54).

2. System (1; 100; 200; 300) zur Verarbeitung einer Lage (2) von Produkten (3) von einer Palette, das sich zur Anwendung des Verfahrens nach Anspruch 1 eignet, wobei das System eine Transportvorrichtung (10; 50) mit einer bewegbaren ersten tragenden Fläche (14; 52), auf die eine Kombination aus einer Lage (2) von Produkten (3) mit einem Gleitbogen (4) darunter von einer Palette platziert werden kann, und Bewegungsmittel zum Bewegen der ersten tragenden Fläche (14; 52) umfasst, **dadurch gekennzeichnet, dass** das System ferner eine bewegbare zweite tragende Fläche (16; 54) und ein stationäres Blockierelement (18; 180) umfasst, das auf einem höheren Niveau als die erste tragende Fläche und die zweite tragende Fläche vorgesehen ist, wobei die Bewegungsmittel derart ausgebildet sind, dass sie die erste tragende Fläche (14; 52) unter dem stationären Blockierelement (18; 180) verlagern, wobei Produkte (3) von dem Blockierelement blockiert werden und von der ersten tragenden Fläche auf die zweite tragende Fläche umgesetzt werden, während der Gleitbogen (4) von der ersten tragenden Fläche unter dem Reibungseinfluss der ersten tragenden Fläche mitgeführt ist und unter dem Blockierelement durchläuft.

3. System nach Anspruch 2, wobei sowohl die erste tragende Fläche (14) als auch die zweite tragende Fläche (16) von wenigstens Abschnitten eines hin und her bewegbaren, über Riemenscheiben (11) geführten Bandtransportelements (12) gebildet sind, wobei die Bewegungsmittel Antriebsmittel zum drehenden Antreiben wenigstens einer der Riemenscheiben aufweist, und wobei die zweite tragende Fläche relativ zur ersten tragenden Fläche derart angeordnet ist, dass die zweite tragende Fläche (16) während einer Verlagerung der ersten tragenden Fläche (14) unter das Blockierelement (18; 180) in Richtung auf das Blockierelement verlagert ist.

4. System nach Anspruch 3, wobei die erste tragende Fläche (14) und die zweite tragende Fläche (16) direkt aneinander anschließen.

5. System nach Anspruch 2, wobei die zweite tragende Fläche (54) von wenigstens einem Abschnitt eines bewegbaren, über Riemenscheiben (11) geführten Bandtransportelements (12) gebildet ist, wobei die Bewegungsmittel auch Antriebsmittel zum drehenden Antreiben wenigstens einer der Riemenscheiben umfassen, wobei die erste tragende Fläche von einem Plattenelement (52) gebildet ist, das direkt über dem Bandtransportelement angeordnet ist, wobei die Bewegungsmittel so ausgebildet sind, dass sie das Plattenelement unter dem Blockierelement (18; 180) hin und her verlagern.

6. System nach einem der vorhergehenden Ansprüche 2-5, wobei die erste tragende Fläche (14; 52) während des Betriebs eine höhere statische Reibung mit einem Gleitbogen (4) als die zweite tragende Fläche (16; 54) haben kann.

7. System nach einem der vorhergehenden Ansprüche 2-6, wobei sich das Blockierelement (18; 180) senkrecht zu der Verlagerungsrichtung der ersten tragenden Fläche (14; 52) erstreckt.

8. System nach einem der vorhergehenden Ansprüche 2-7, das ferner weitere Bewegungsmittel zur Bewegung des Blockierelements (180) in im Wesentlichen vertikaler Richtung zwischen einer ersten, aktiven Position, in der das Blockierelement Produkte (3) während des Betriebs blockieren kann, und einer zweiten, passiven Position aufweist, in der das Blockierelement außer Reichweite von beim Betrieb auf der ersten tragenden Fläche (14; 52) vorhandenen Produkten verlagert ist.

9. System nach Anspruch 3 oder 5 oder einem entsprechenden davon abhängigen Anspruch, wobei die Länge der Transportvorrichtung (10; 50) in Verlagerungsrichtung der zweiten tragenden Fläche (16; 54) betrachtet wenigstens im Wesentlichen gleich der Länge der Oberseite der Transportvorrichtung ist.

10. System nach einem der vorhergehenden Ansprüche 2-9, wobei ein an die Transportvorrichtung (10; 50) anschließender Abgabeförderer (30) vorgesehen ist, wobei eine tragende Fläche des Abgabeförderers an die zweite tragende Fläche (16; 54) der Transportvorrichtung derart anschließend platziert ist, dass während ihrer Verlagerung Produkte (3) während des Betriebs von wenigstens der zweiten tragenden Fläche auf die tragende Fläche des Abgabeförderers umgesetzt werden.

11. System nach Anspruch 8 und nach Anspruch 9 oder 10, wobei ein an die Transportvorrichtung (10; 50) anschließender Zuführförderer (20) vorgesehen ist, wobei eine tragende Fläche des Zuführförderers an die erste tragende Fläche (14; 52) der Transportvorrichtung derart anschließend platziert ist, dass eine Kombination aus einer separaten Lage (2) von Produkten (3) mit einem Gleitbogen (4) darunter während des Betriebs von der tragenden Fläche des Zuführförderers (20) auf die erste tragende Fläche der Transportvorrichtung umgesetzt wird.

12. System nach einem der vorhergehenden Ansprüche 2 bis 10, wobei das System ferner mit Zuführmitteln zum Zuführen einer Kombination aus einer separaten Lage (2) von Produkten (3) mit einem Gleitbogen (4) darunter von einer Palette zur Transportvorrichtung versehen ist, wobei die Zuführmittel vorzugsweise vom Vakuumgreifertyp sind.

## Revendications

1. Procédé de traitement d'une couche (2) de produits (3) provenant d'une palette, le procédé comprenant les étapes suivantes :
a) la fourniture d'un dispositif de transport (10 ; 50) comportant une première surface porteuse mobile (14 ; 52), une seconde surface porteuse mobile (16 ; 54) et un élément de blocage fixe (18 ; 180) prévu à un niveau plus élevé que la première surface mobile et la seconde surface mobile,
b) la mise en place sur la première surface porteuse (14 ; 52) de l'association d'une couche de produits et d'une feuille de palettisation (4) placée sous celle-ci provenant d'une palette,
c) le déplacement de la première surface porteuse (14 ; 52) sous l'élément de blocage fixe (18 ; 180) avec des moyens de déplacement, dans lequel les produits (3) sont bloqués par l'élément de blocage et sont transférés de la première surface porteuse sur la seconde surface porteuse (16 ; 54) pendant que la feuille de palettisation (4), sous l'influence d'un frottement avec la première surface porteuse, est transportée par la première surface porteuse et passe sous l'élément de blocage, et
d) le retrait de la couche (2) de produits (3) de la seconde surface porteuse (16 ; 54).

2. Système (1 ; 100 ; 200 ; 300) de traitement d'une couche (2) de produits (3) provenant d'une palette apte à l'application du procédé selon la revendication 1, le système comprenant un dispositif de transport (10 ; 50) comportant une première surface porteuse mobile (14 ; 52) sur laquelle peut être placée l'association d'une couche (2) de produits (3) et d'une feuille de palettisation (4) placée sous celle-ci provenant d'une palette, et des moyens de déplacement pour déplacer la première surface porteuse (14 ; 52), **caractérisé en ce que** le système comprend en outre une seconde surface porteuse mobile (16 ; 54) et un élément de blocage fixe (18 ; 180) prévu à un niveau plus élevé que la première surface porteuse et la seconde surface porteuse, dans lequel les moyens de déplacement sont conçus pour déplacer la première surface porteuse (14 ; 52) sous l'élément de blocage fixe (18 ; 180), dans lequel les produits (3) sont bloqués par l'élément de blocage et sont transférés de la première surface porteuse sur la seconde surface porteuse (16 ; 54) pendant que la feuille de palettisation (4), sous l'influence d'un frottement avec la première surface porteuse, est transportée par la première surface porteuse et passe sous l'élément de blocage.

3. Système selon la revendication 2, dans lequel la première surface porteuse (14) et la seconde surface porteuse (16) sont toutes deux formées par au moins des parties d'un élément de transport à courroie mobile en va-et-vient (12) passant sur des poulies (11), dans lequel les moyens de déplacement comprennent des moyens d'entraînement pour entraîner en rotation au moins une des poulies, et dans lequel la seconde surface porteuse est agencée par rapport à la première surface porteuse de telle sorte que, pendant le déplacement de la première surface porteuse (14) sous l'élément de blocage (18 ; 180), la seconde surface porteuse (16) est déplacée dans la direction de l'élément de blocage.

4. Système selon la revendication 3, dans lequel la première surface porteuse (14) et la seconde surface porteuse (16) sont directement reliées entre elles.

5. Système selon la revendication 2, dans lequel la seconde surface porteuse (54) est formée par au moins une partie d'un élément de transport à courroie mobile (12) passant sur des poulies (11), dans lequel les moyens de déplacement comprennent également des moyens d'entraînement pour entraîner en rotation au moins une des poulies, dans lequel la première surface porteuse est formée d'un élément plateau (52) agencé directement au-dessus de l'élément de transport à courroie, dans lequel les moyens de déplacement sont conçus pour déplacer l'élément plateau selon un mouvement de va-et-vient sous l'élément de blocage (18 ; 180).

6. Système selon l'une quelconque des revendications 2 à 5 précédentes, dans lequel la première surface porteuse (14 ; 52) est conçue, pendant l'utilisation, pour avoir un frottement statique plus important avec une feuille de palettisation (4) que la seconde surface porteuse (16 ; 54).

7. Système selon l'une quelconque des revendications 2 à 6 précédentes, dans lequel l'élément de blocage (18 ; 180) s'étend perpendiculairement à la direction du déplacement de la première surface porteuse (14 ; 52).

8. Système selon l'une quelconque des revendications 2 à 7 précédentes, comprenant en outre des moyens de déplacement pour déplacer l'élément de blocage (180) sensiblement dans une direction verticale entre une première position active, dans laquelle l'élément de blocage peut bloquer les produits (3) pendant l'utilisation, et une seconde position passive dans laquelle l'élément de blocage est déplacé hors de portée des produits présents sur la première surface porteuse (14 ; 52) pendant l'utilisation.

9. Système selon la revendication 3 ou 5 ou une de leurs revendications dépendantes respectives, dans lequel, vue dans la direction de déplacement de la seconde surface porteuse (16 ; 54), la longueur du dispositif de transport (10 ; 50) est au moins sensiblement égale à la longueur de la face supérieure du dispositif de transport.

10. Système selon l'une quelconque des revendications 2 à 9 précédentes, dans lequel il est prévu un convoyeur de décharge (30) relié au dispositif de transport (10 ; 50), dans lequel une surface porteuse du convoyeur de décharge se trouve reliée à la seconde surface porteuse (16 ; 54) du dispositif de transport de sorte que pendant son déplacement, les produits (3) sont transférés pendant l'utilisation d'au moins la seconde surface porteuse sur la surface porteuse du convoyeur de décharge.

11. Système selon la revendication 8 et selon la revendication 9 ou 10, dans lequel il est prévu un convoyeur d'alimentation (20) relié au dispositif de transport (10 ; 50), dans lequel une surface porteuse du convoyeur d'alimentation se trouve reliée à la première surface porteuse (14 ; 52) du dispositif de transport de sorte que pendant son déplacement, une association d'une couche séparée (2) de produits (3) et d'une feuille de palettisation (4) placée sous celle-ci est transférée de la surface porteuse du convoyeur d'alimentation (20) sur la première surface porteuse du dispositif de transport.

12. Système selon l'une quelconque des revendications 2 à 10 précédentes, dans lequel le système est équipé en outre de moyens de fourniture pour fournir au dispositif de transport une association d'une couche séparée (2) de produits (3) et d'une feuille de palettisation (4) placée sous celle-ci provenant d'une palette, dans lequel les moyens de fourniture sont de préférence du type préhenseur à ventouse.
